(19) Europäisches Patentamt
European Patent Office
Office européen des brevets

(11) **EP 2 951 623 B1**

(12) **EUROPEAN PATENT SPECIFICATION**

(45) Date of publication and mention of the grant of the patent:
**01.01.2020 Bulletin 2020/01**

(21) Application number: **14745347.6**

(22) Date of filing: **27.01.2014**

(51) Int Cl.:
*G02B 5/32* (2006.01)    *G03H 1/26* (2006.01)
*F21V 8/00* (2006.01)    *G02B 27/09* (2006.01)
*G02B 6/02* (2006.01)    *G02B 6/14* (2006.01)
*G03H 1/02* (2006.01)

(86) International application number:
**PCT/US2014/013203**

(87) International publication number:
**WO 2014/120610 (07.08.2014 Gazette 2014/32)**

(54) **OPTICAL WAVEGUIDE WITH INTEGRATED HOLOGRAM**

OPTISCHER WELLENLEITER MIT INTEGRIERTEM HOLOGRAMM

GUIDE D'ONDE OPTIQUE À HOLOGRAMME INTÉGRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2013 US 201361758207 P**
**11.10.2013 US 201361889855 P**

(43) Date of publication of application:
**09.12.2015 Bulletin 2015/50**

(73) Proprietors:
• **OFS Fitel, LLC**
**Norcross, GA 30071 (US)**
• **University of Aarhus**
**8000 Aarhus C (DK)**

(72) Inventors:
• **GRUNER-NIELSEN, Lars**
**2700 Bronshoj**
**Copengagen (DK)**

• **SAVOLAINEN, Juha-matti**
**8541 Skoedstrup (DK)**
• **BALLING, Peter**
**8210 Aarhus V (DK)**
• **KRISTENSEN, Poul**
**2500 Valby (DK)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
EP-A1- 2 541 809        WO-A1-2011/098090
WO-A2-2013/003863        US-A1- 2003 099 452
US-B2- 7 116 453

**Description**

Technical Field

The present invention relates to an optical waveguide and in particular an optical fiber comprising a core region. The invention further relates to optical devices comprising such an optical waveguide or fiber. Finally, the invention relates to a method of modifying the refractive index of the core region of an optical waveguide or fiber.

Background

Few-mode fibers (FMF) have gained increasing interest in recent years through their many applications, such as dispersion compensation, anomalous dispersion below 1200 nm, and mode-division-multiplexed transmission systems. For most applications, efficient mode conversion between the fundamental and higher-order modes is needed, and several methods have been proposed and also demonstrated.

Today mode converters are typically made by using either long-period gratings or free-space elements, such as phase plates or spatial-light modulators. Long-period gratings having a total length from a few millimeters up to a few centimeters can be written into a fiber. However, mode converters based on phase plates or spatial light modulators are relatively bulky and suffer from low conversion efficiency. Further, long period gratings can only couple between the guided modes of the fiber and can depending on the fiber design have a quite narrow bandwidth.

In general, the prior art lacks waveguides that can be tailored to specific purposes.

US 7 116 453 B2 discloses a configurable holographic structure which may be dynamically re-configured through the application of control mechanisms. Input and output waveguides, typically optical fibers, are coupled to a planar thin-slab device forming the holographic structure.

Summary of the Invention

An object of the invention is to provide an optical waveguide, which allows tailored beam shaping or mode shaping.

This object is achieved by an optical waveguide according to claim 1.

A further object is to provide a more compact alternative to fiber long- period gratings used for mode conversion, which further can convert between a guided mode of the fiber and an arbitrary input or output mode distribution.

An additional object is to provide a waveguide with an integrally formed mode converter or beam shaper.

The invention provides a waveguide comprising an axial direction and a cross-section perpendicular to said axial direction, wherein the optical waveguide comprises a core region having a core thickness, and wherein the core region includes an integrally formed hologram, which extends along a first axial segment of the optical waveguide, the first axial segment having a first axial length, wherein the hologram seen in the cross-section includes a micro-structure with written elements having a modified refractive index different from the core refractive index and areas with an unmodified refractive index. The waveguide is configured for propagating light in the axial direction, and the written elements individually have a dimension, which is smaller than the core thickness.

In most cases the hologram is preferable made in the core of the fiber, but it should be understood that more generally speaking the hologram can be formed in any region of the fiber with a substantial share of the electromagnetic profile of the light.

Accordingly, it is seen that the hologram is formed from writing a desired pattern into the core region of the optical waveguide. Thus, the individual written elements have a dimension, which is smaller than the thickness or height of the core region. Further, it is clear that the unmodified refractive index is equal to the core refractive index.

Since the written elements have a refractive index that is different from the non- modified areas of the core region, the written elements may modify the electromagnetic profile of light propagating in the axial direction in the core region of the optical waveguide. Thereby, it is possible to very precisely carry out beam shaping or mode shaping by selectively changing the refractive index at specific positions within the core region, e.g. by letting the individual written element have a certain axial length and refractive index difference compared to the unmodified areas of the core region. The design of the hologram may be calculated from the desired beam shaping, and in general the hologram may carry out any type of beam shaping or mode shaping. Overall, the invention provides a waveguide, which can be tailored to a specific purpose.

Such, beam shaping or mode shaping holograms may be very compact compared to for instance long-period gratings used for mode conversion. This reduces any nonlinearities that may occur, which in turn allows a mode converter utilizing the waveguide according to the invention to handle a higher level of optical power.

The hologram may advantageously comprise a phase hologram. Since the hologram has an axial length and cross-sectional microstructure, the hologram may also be perceived as a bulk hologram or a phase volume hologram.

However, in general the design of the hologram may be calculated from the desired beam shaping and based on solving the propagation equations.

It is recognized that the core of the waveguide may be of various types, e.g. a step index core, a graded index core, or even more complex structures. However, in general, the hologram defines an area, where the first axial segment comprises written structures so as to modify the core of the waveguide and to provide the desired beam shaping, mode conversion or similar. Thus, it is seen that the core region may include its original shape and composition along a majority of the fiber length and only be modified in the first axial segment of the fiber. The non-modified areas of the core region have a refractive index which is defined as the core refractive index.

In a first embodiment, the optical waveguide is an optical fiber, wherein the core thickness is a core diameter. Thus, the hologram is written in the core region of the optical fiber.

As previous mentioned, the hologram may be adapted to change an incoming electromagnetic profile into a desired electromagnetic profile transmitted from the hologram. Accordingly, the composition of the hologram may be calculated according to the desired profile change and written accordingly. Preferably, the hologram is adapted to convert light from a guided mode to the desired electromagnetic profile or vice versa.

The written elements may have been formed in the core region by irradiating areas in the core with a radiation source. The radiation source may advantageously be a high-power laser, e.g. a high-power pulsed laser. A femtosecond laser at this moment is believed to be particular suited for writing the hologram. However, other laser or radiation sources may be used, such as a UV-laser or a $CO_2$ laser.

In an advantageous embodiment, the hologram is arranged so that an axial end of the hologram is located 500 $\mu$m or less from an end face of the optical waveguide. The distance between the axial end of the hologram and the end face of the optical waveguide may also be 250 $\mu$m or less, and may even be 100 $\mu$m or less. Thereby, the light may have a desired mode shape or guided mode for propagating along a majority of the optical waveguide, e.g. the guided mode, and the hologram is utilized only near the end face of the fiber for converting the phase and/or intensity profile of the light. The hologram may be used either in connection with in-coupling of light or coupling out the light.

The optical waveguide may further comprise a cladding region surrounding the core region, wherein the cladding region has a cladding refractive index, and wherein the cladding refractive index does not vary in the axial direction within the first axial segment of the optical waveguide. In other words, the hologram is formed in the core region of the wave guide only. Advantageously, the cladding refractive index is lower than the refractive index of the core. The cladding may comprise different cladding layers with different refractive indices. However, it is also seen that the waveguide or optical fiber may comprise a core region only.

The length of the first axial segment may be 10-1000 $\mu$m. The length of the first axial segment may also be 10-700 $\mu$m, or even 10-500 $\mu$m, and further even 10-300 $\mu$m. Overall, it is seen that the length of the first axial segment and accordingly also the hologram is much shorter than corresponding long period grating used for mode conversion.

The written elements are as previously mentioned smaller than the core thickness or core diameter of the waveguide. The written elements may for instance have a cross-sectional dimension which is between 0.01% and 40% of the core thickness. The cross-sectional dimension of the written elements may for instance be between 0.5 and 10 $\mu$m. The cross-sectional dimension is preferably the cross-sectional diameter of the written elements.

The written elements may be formed as elongated elements. In practice, the elongated element may be shaped as a single connected element. However, the elongated element may also be sectioned so that it comprises of a plurality of separately written elements. Accordingly, the separate elements may have a mutual spacing. However, the spacing is preferably small in order to let the hologram be as compact as possible. Combined, the separate elements must have a predetermined length to provide the desired phase change and intensity change based on the refractive index difference between the refractive index of the written elements and the remaining area of the core region.

The elongated elements may advantageously be oriented parallel to the axial direction of the optical waveguide. However, in principle the elongated elements may also be skewed compared to the axial direction of the fiber. It is conceived that such oriented elongated elements can be used to obtain certain filter effects. It is also clear that the micro-structure and hence the design of the hologram may vary in the axial direction of the optical waveguide.

In a first embodiment, the hologram is adapted to convert light from one mode to another mode, e.g. from the fundamental mode to a higher-order mode or vice versa. Since the hologram may be adapted to complex beam shaping, the hologram may in principle be adapted to convert light between any two modes. This embodiment is particular useful for multimode fibers.

The hologram may also be adapted to compensate for a phase difference between two guided modes in the optical waveguide. In another embodiment, the hologram is adapted to function as a filter. The filter may for instance be a notch filter.

In a third embodiment, the hologram is a diffractive optical element having an optical function. The diffractive optical element may for instance function as a lens element. Accordingly, the lens element may focus light transmitted from the end face of the optical waveguide. This may advantageously be used in different optical devices, such as endoscopes. Alternatively, the lens element may function as a receiving lens and provide an improved in-coupling of light into the core region of the fiber.

In principle, the mode conversion and diffractive optical element may be implemented in the same hologram, since the invention makes it possible to provide complex beam shaping. Thus, the mode conversion and optical function may be integrated in a single hologram. However, according to an advantageous embodiment, the optical waveguide is provided with two holograms. Accordingly, the invention also provides a waveguide, wherein the core region includes an additional integrally formed hologram, which extends along a second axial segment of the optical waveguide, the second axial segment having a second axial length. It is clear that the additional hologram - similar to the first hologram - seen in the cross-section includes a micro-structure with written elements having a modified refractive index different from the core refractive index and areas with a non-modified refractive index. The additional hologram may be designed with the same dimensional constraints as the first hologram, i.e. similar axial length and cross-sectional dimensions of the written elements.

In one embodiment, the first hologram is adapted to convert light from a first mode to a second mode, and the additional hologram is a diffractive optical element, such as a lens element. Accordingly, the two holograms may in combination function so as to first convert the mode from e.g. a high order mode to a fundamental mode and then focus the light emitted from the end face of the optical waveguide. Alternatively, the lens element may facilitate in-coupling of light from a fundamental mode and the first hologram then convert the light to a high order mode for guiding along the majority of the optical waveguide.

In another embodiment, the first hologram is adapted to change the phase profile of light, and wherein the additional hologram is adapted to change the intensity profile of light, advantageously so that the light propagates through the intensity modifying hologram first and subsequently the phase modifying hologram.

The first hologram and the additional hologram may be arranged with a mutual axial spacing. The mutual axial spacing may for instance be between 1 and 100 $\mu$m or even between 1 and 50 $\mu$m. The mutual axial spacing may also be between 0 and 1 $\mu$m. Accordingly, it is seen that the two holograms may be abutting.

The written elements may be arranged asymmetrically in the core region, e.g. asymmetric about the longitudinal axis of the optical waveguide or optical fiber. Asymmetrically arranged written elements may for instance facilitate conversion between symmetric and anti-symmetric modes or vice versa, e.g. between $LP_{01}$ and $LP_{11}$.

Alternatively, the written elements are arranged symmetrically in the core region, e.g. symmetric about the longitudinal axis of the optical waveguide or optical fiber. Symmetrically arranged written elements may for instance facilitate conversion from symmetric to symmetric mode or from anti-symmetric to anti-symmetric modes, e.g. from $LP_{01}$ to $LP_{02}$, from $LP_{01}$ to $LP_{07}$, or from $LP_{11}$ to $LP_{12}$.

In one embodiment, a modified refractive index of the written elements is lower than the refractive index of the non-modified areas of the core region. In an alternative embodiment, the refractive index of the written elements is higher. The modified refractive index may in general be higher than the than the refractive index of air. The modified may advantageously be between 0.005 and 0.05 lower or higher, or even between 0.005 and 0.025 lower or higher, than the core refractive index.

An optical device may include an optical waveguide, said waveguide comprising an axial direction and a cross-section perpendicular to said axial direction, wherein the optical waveguide comprises a core region having a core thickness, and wherein the core region includes an integrally formed hologram, which extends along a first axial segment of the optical waveguide, the first axial segment having a first axial length, wherein the hologram seen in the cross-section includes a micro-structure with written elements having a modified refractive index different from the core refractive index and areas with an unmodified refractive index. The optical wave- guide may advantageously be an optical fiber having a core region with a core diameter.

The optical device may further comprise a second optical waveguide, advantageously a second optical fiber. The end face of the first optical waveguide or fiber may be arranged near an end face of the second optical waveguide or fiber. The end faces of the two waveguides or fibers are preferably arranged so that the core region of the first fiber is arranged near a core region of the second fiber. In a simple setup, this may be carried out by a fiber connector. It is seen that the term end face in the optical device corresponds to a boundary. Thus, the term end face may also define the boundary between two optical waveguides or fibers or even define the transition from one fiber type or core type to another fiber type or core type.

The first optical waveguide and the second optical waveguide may also be spliced together. The splicing can for instance be a mechanical splicing or a fusion splicing.

The hologram of the first optical waveguide may be adapted to convert light from a guided mode of the first optical waveguide to a guided mode of the second optical waveguide. This may be obtained by the hologram modifying the electromagnetic field distribution to a shape that optimally excites the selected mode in the second fiber.

While it is described that the hologram is arranged in the first optical waveguide, preferably located near the end face thereof, it is equally recognized that the same result may be achieved by arranging the hologram in the core region of the second optical waveguide. Further, it is clear that the first optical waveguide may comprise a first hologram, preferably near the end face of the optical waveguide, and the second optical waveguide may comprise a second hologram, preferably near the end face of the second fiber, in order to obtain an efficient conversion between guided modes in the two fibers. It is also possible to form the hologram in a single optical waveguide or fiber and then arrange said optical waveguide or fiber between two other optical waveguides or fibers.

The first optical fiber may be a single-mode optical fiber. The second optical waveguide is a few-mode fiber, a multimode fiber, a large-mode-area fiber, or a large-mode-area high-order-mode fiber. This may be particularly suitable for conversion of guided modes from a single mode fiber (SMF) to a few mode fiber (FMF). It is also suitable for conversion from a SMF to large-mode-area high-order-mode (LMA- HOM) fibers, where the hologram may be tailored to couple to a higher order mode of the LMA-HOM fiber, or vice versa.

The optical device may be a mode converter, and advantageously a broadband mode converter. The optical device may be an endoscope. The hologram may be designed as a lens element that focuses light emitted from the end phase of the first optical waveguide.

A method for modifying a refractive index of a core region of an optical waveguide, preferably an optical fiber, comprising an axial direction and a cross-section perpendicular to said axial direction, wherein the core region has a core diameter and a core refractive index, may comprise the step of:

irradiating volumes of the core region so as to modify said volumes to a modified refractive index different from the core refractive index and so as to form a hologram which extends along a first axial segment of the optical waveguide, the first axial segment having a first axial length, and

wherein the hologram seen in the cross-section includes a micro-structure with written elements having a modified refractive index different from the core refractive index and areas with an unmodified refractive index.

The step of irradiating volumes of the core region may comprise the following steps: a) modifying the refractive index of a first volume within the core region of the optical waveguide by irradiating said first volume, b) modifying the refractive index of an additional volume within the core region of the optical waveguide by irradiating said additional volume, c) repeating step b) until a desired spatial distribution between modified and unmodified volumes within the hologram is obtained.

The individual volumes that are written may be perceived as small voxels with a modified refractive index within the core region of the optical waveguide.

The core region may be irradiated from an end face of the optical waveguide. Thereby, it is easier to control the writing of modified volumes or voxels in the core region of the optical waveguide compared to setups, where the volumes are written from a side face of the optical waveguide. The core region may advantageously be irradiated from a direction substantially parallel to the axial direction of the optical waveguide.

Thereby, elongated elements parallel to the axial direction of the fiber may more easily be written.

An ultrashort pulse laser, such as a femtosecond laser, may be used to irradiate the core region of the optical waveguide in order to form the volumes with modified refractive index.

Each volume may be irradiated for a predetermined period of time in order to induce a known refractive index change. The refractive index change depends on the power of the irradiated light and the period of time that the volume is irradiated. When using a pulsed laser, the refractive index change depends on the number of pulses focused into said volume. This in turn leads to a given electromagnetic field change per length at a given wavelength.

The desired spatial distribution between modified and unmodified volumes within the hologram may be calculated on basis of the electromagnetic field distribution of an incoming light and the desired electromagnetic field distribution of light transmitted from the hologram. Thus, the irradiation point may be moved between exposures of the different volumes so as to obtain the desired composition. Since the change in refractive index is known, it is thereby possible to calculate the axial length of the individual written elements in order to obtain the desired total field distribution change. While it is here described that the fiber or writing setup is moved between exposures, it is also recognized that the hologram may be written continuously by sweeping the fiber or the writing setup.

A radiation source may be set up in a stationary optical system, and where the optical waveguide is arranged on translational stage. The translational stage may preferably be translational in three directions (x, y, and z), whereby the position of the modified volumes may be controlled very precisely. Thereby, the spatial composition of the hologram may also be written very precisely. Brief Description of the Drawings

The invention is explained in detail below with reference to the drawing(s), in which

Figs. 1 a and 1 b shows an optical fiber according to the invention, seen from the side and in a cross-section, respectively,

Fig. 2 shows a slab waveguide according to the invention,

Fig. 3 shows a second embodiment of an optical fiber according to the invention,

Fig. 4 shows a cross section of a third embodiment of an optical fiber according to the invention,

Fig. 5 shows a cross section of a fourth embodiment of an optical fiber according to the invention,

Fig. 6 shows a cross section of a fifth embodiment of an optical fiber according to the invention,

Fig. 7 shows an optical device according to the invention comprising a first optical fiber and a second optical fiber,

Fig. 8 shows a side view of a sixth embodiment of an optical fiber according to the invention,

Fig. 9 shows a side view of a seventh embodiment of an optical fiber according to the invention,

Fig. 10 shows an experimental setup for writing a hologram in the core region of a fiber and for carrying out far-field measurements,

Fig. 11 shows an example of a measured far-field intensity show on a logarithmic scale,

Fig. 12 shows an illustration and a microscope image of the geometry of a modified area of a core region of an optical fiber,

Fig. 13 shows measured and simulated far field- radial intensity profiles,

Fig. 14 shows the sum of deviations squared on a logarithmic scale as a function of a refractive index change and radius of a modification used in a simulation,

Fig. 15 shows the extinction ratio and coupling efficiency between two modes, and

Fig. 16 shows a schematic view of a proposed mode converter according to the invention.

Detailed description of the Invention

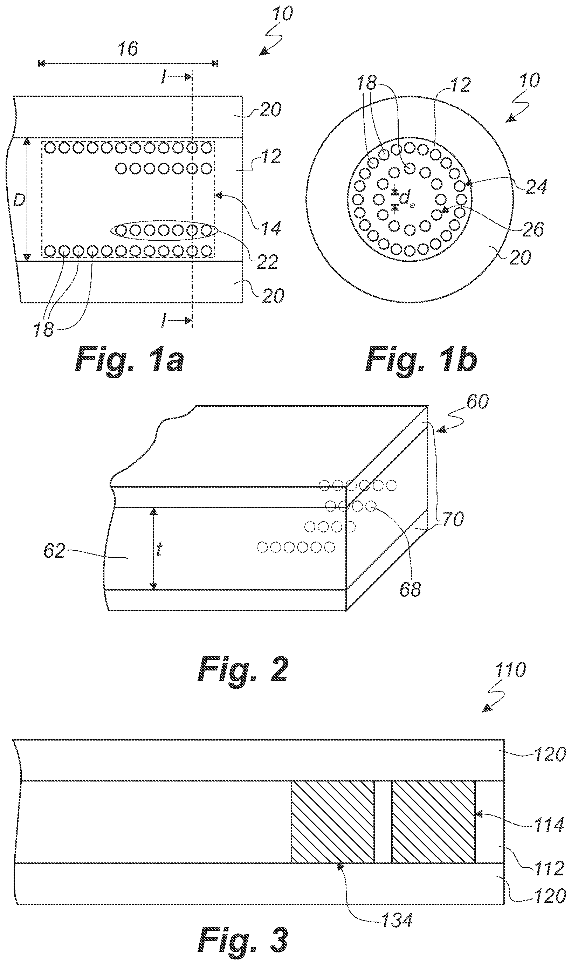

Fig. 1 shows an optical fiber 10 according to the invention. Fig. 1a shows a side view of the optical fiber 10, and Fig. 1b shows a cross-section through the fiber along the line I-I in Fig. 1a. The optical fiber comprises a core region 12 having a core diameter D and a core refractive index $n_c$. The core region 12 comprises an integrally formed hologram 14, which extends along a first axial segment 16 having a length $L_1$. As seen from Fig. 1b, the hologram 14 includes a micro-structure with written elements 18. The written elements have a modified refractive index $n_e$, which is different from the areas of the core region with an unmodified core refractive index $n_c$. It is recognized that the core of the optical fiber 10 may be of various types, e.g. a step index core, a graded index core, or even more complex structures. Thus, the optical fiber comprises such a core type along a major part of the optical fiber, and the core structure is modified only along the axial extent of the hologram 14.

The written elements 18 may have been written in the core region 12 of the optical fiber using for instance an ultrashort pulse laser, such as a femtosecond laser, irradiating small volumes in the core region 12. Each volume may be irradiated for a predetermined period of time in order to induce a known refractive index change. The refractive-index change depends on the power of the irradiated light and the period of time that the volume is irradiated. When using a pulsed laser, the refractive index change depends on the number of pulses focused into said volume. This in turn leads to a given electromagnetic field distribution change per length at a given wavelength. The written elements 18, seen in a cross sectional plane, have a diameter $d_e$ or maximum inner dimension. The written elements have a diameter, which is smaller than the diameter D of the core region 12. The ratio between the diameter $d_e$ of the written elements and the diameter D of the core region 12 may advantageously be between 2% and 40%.

In the shown embodiment, the written elements 18 are disposed along two circles or rings 24, 26. The individual written elements 18 are here depicted as having spacing between them, but in principle they may also be written so that they form continuous rings. This can be carried out by writing the individual elements so that they overlap or by moving the fiber or a writing setup in a sweeping motion.

As seen in Fig. 1a, the individual written elements 18 form elongated elements 22 that extend axially and parallel to an axis of the optical fiber 10. Again, it is seen that the elongated elements 22 are formed by individual written elements 18, which are having a mutual spacing. However, the elongated elements may also form a continuous element. Thus, the rings and elongated elements may in combination form one or more cylinder shells. Combined, the separate elongated elements 22 must have a predetermined length to provide the desired field distribution change based on the refractive index difference between the refractive index of the written elements and the remaining area of the core region.

The shown embodiment has one cladding layer 20 only. However, it is recognized that the optical fiber 10 may include a plurality of cladding layers. Further, the invention also contemplates embodiments having a core region only, i.e. without any cladding layers.

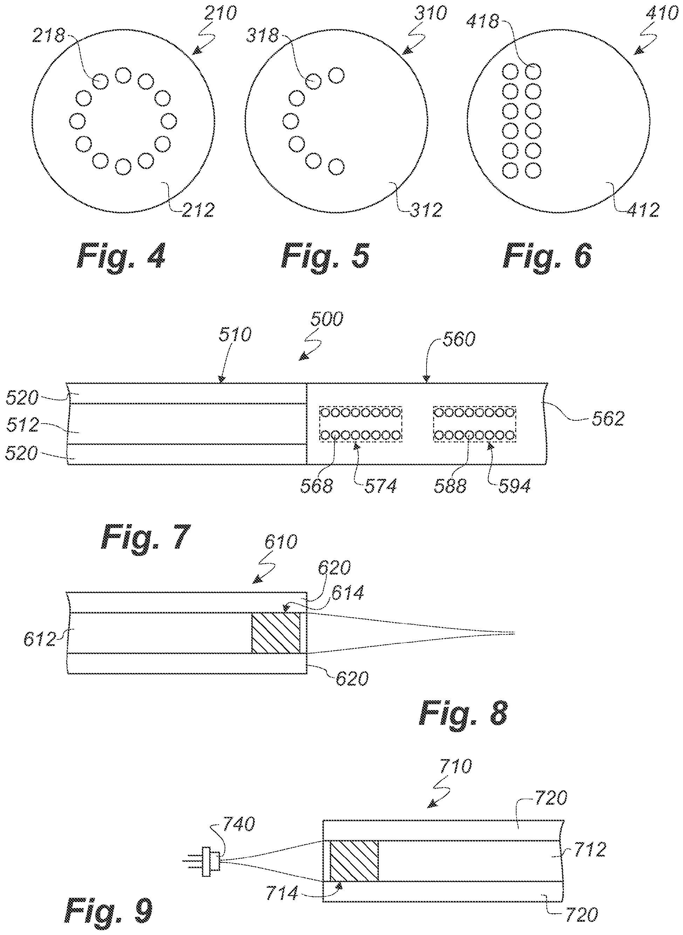

While the shown embodiment comprises written element 18 disposed along two circles 24, 26, the written elements can be arranged in various ways. Fig. 4 shows one example of an optical fiber 210 having written elements 218 disposed along a single circle or ring only in the core region 212 of the optical fiber 210. The written elements thus form a cylinder shell in the core region 212 of the optical fiber 210. Embodiments with symmetrically arranged written elements as shown in Figs. 1 and 4 may for instance be applicable for mode conversion between symmetrical modes or asymmetrical modes. Fig. 5 shows another embodiment on an optical fiber 310 having written elements 318 disposed along a semi-circle in the core region 312 of the optical fiber 310. Thus, the written elements 318 form a cylinder half shell in the core region 312 of the optical fiber 310. Embodiments having asymmetrically arranged written elements may for instance be applicable for converting symmetric modes to asymmetric modes, or vice versa. The written elements need not be arranged along circles, but may also be arranged in planes that extend parallel to the axis of the optical fiber. Such an embodiment is shown in Fig. 6, where a number of written elements 418 are arranged in two planes in a core region 412 of an optical fiber 410. While the written elements 418 in Fig. 6 are depicted with a small mutual spacing, it is recognized that the written elements may be written as a continuous element. This can be carried out by writing overlapping elements or by moving the fiber in a sweeping motion relative to a writing beam.

The embodiments shown in Figs. 1 and 4-6 are meant as examples only. The hologram of the optical fiber may in general be used for any kind of beam shaping or mode shaping. Thus, the invention provides a versatile waveguide and method for converting the electromagnetic field distribution propagating through the waveguide. The desired spatial distribution between modified and unmodified volumes within the hologram may be calculated on basis of the electromagnetic field distribution of an incoming light and the desired electromagnetic field distribution of light transmitted from the hologram. Since the induced refractive index change is known, it is possible to calculate the axial length of the individual written elements in order to obtain the desired total field distribution change.

The length of the first axial segment may be between 10 and 1000 $\mu$m, and advantageously between 10 and 300 $\mu$m. The hologram may be arranged so that an axial end of the hologram is located 250 $\mu$m or less from an end face of the optical waveguide, and advantageously 100 $\mu$m or less.

While the embodiment shown in Fig. 1 and various following embodiments are described in relation to optical fibers, it is recognized that the embodiments are applicable to other types of optical waveguides, such as a slab waveguide 60 as shown in Fig. 2. Similar to the optical fiber of Fig. 1, the slab waveguide 60 comprises a core region 62 with a thickness $t$, and a surrounding cladding 70. A hologram comprising written elements 18 has been formed in the core region 62 of the slab waveguide 60.

The optical fiber or waveguide may comprise a plurality of holograms. Fig. 3 shows such an embodiment, where a first hologram 114 and a second hologram 134 are formed in a core region 112 of an optical fiber 110 with a surrounding cladding region 120. The two holograms 114, 134 may be complimentary in order to perform a desired beam shaping or mode shaping, or they may carry out different conversions. The two holograms 114, 134 may advantageously be arranged closely to each other, e.g. with a spacing of less than 100 $\mu$m, such that the two holograms 114, 134 together form a compact unit.

The optical fiber or waveguide according to the invention may be used for various purposes, such as conversion between guided modes in an optical fiber or for conversion of modes between two types of optical fibers. Fig. 7 shows an optical device 500 according to the invention comprising a first optical fiber 510 and a second optical fiber 560. The first optical fiber 510 may for instance be a single mode fiber (SMF) comprising a core region 512 and a cladding region 520. The second optical fiber 560 may be a few modes fiber (FMF) comprising a core region 562. The core region 562 of the second optical fiber 560 includes a first hologram 574 comprising a plurality of written elements 568, and a second hologram 594 comprising a plurality of written elements 588. The two holograms 574, 594 may e.g. convert the guided mode from the single mode fiber 510 to a $LP_{02}$ mode of the few mode fiber 560. The optical device also works in the reverse manner, i.e. where a guided mode in the FMF is converted to the guided mode of the SMF. While the hologram or holograms in the shown embodiment are written in the FMF, it is recognized that they may be written in the SMF or written in the SMF and the FMF. Further, it is also possible to write the hologram(s) in a third optical fiber, which is arranged between the first optical fiber 510 and the second optical fiber 560. The two optical fibers 510 and 560 may be connected via a fiber connector or be spliced together.

The holograms may also be designed as a diffractive optical element adapted to carry out one or more optical functions, such as focusing and/or beam splitting. Fig. 8 shows a side view of an optical fiber 610 according to the invention. The optical fiber 610 comprises a core region 612 and a surrounding cladding 620. A hologram 614 is written in the core region 612 of the optical fiber 610. The hologram 614 is designed as a lens element, which focuses the light emitted from an end face of the optical fiber 610. Such an optical fiber may for instance be suitable for use in an endoscope.

A lens element may also function in a reverse mode, e.g. for an efficient in-coupling of light into the core region of the optical fiber. Fig. 9 shows a side view of an optical fiber 710 comprising a core region 712 and a surrounding cladding 720. A hologram 714 in form of a lens element is written in the core region 712 of the optical fiber 710, which may facilitate an efficient in-coupling of light emitted from a light source 740, such as a laser diode or a VCSEL.

EXAMPLES

In the following various examples are disclosed describing experiments, which have been carried out in order to demonstrate the invention.

Basic index structures written into the fiber together with subsequent quantitative analyses of the index change are demonstrated. The magnitude and the spatial extent of the index change are obtained from the far-field profiles measured before and after the fiber modification by comparing these measurements to numerical simulations and optical-microscope images. The same numerical methods are then used to propose a design for an $LP_{01}$-$LP_{02}$ mode converter.

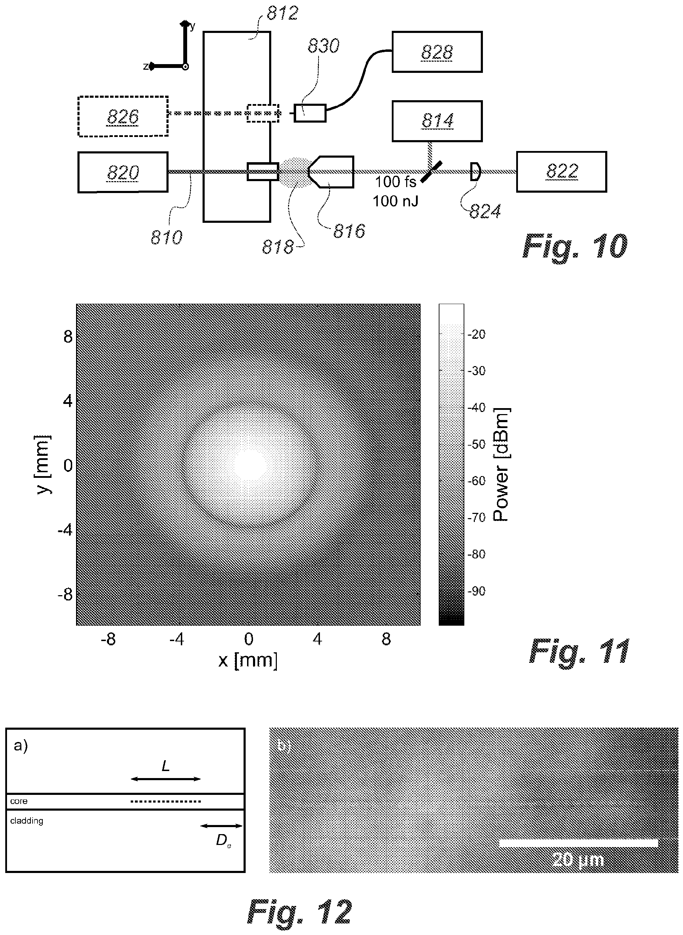

The experimental setup used for the demonstration is shown in Fig. 10. An optical fiber 810 is mounted on a motorized xyz-stage 812, and a 800 nm, 100 fs output from a Ti:Sapphire laser 814 is focused with a microscope objective 816 (Olympus UPLSAPO 20XO, oil immersion 818) inside the optical fiber 810. The maximum effective writing depth into the fiber is 300 $\mu$m. For visualizing the fiber position, a broadband light source 820 is connected to the other end of the fiber, and the transmitted light is collected by a camera 822 with an optical system consisting of the above mentioned objective and an $f$=100 mm achromatic lens 824. In the examples demonstrated here, the structures written are lines, parallel with and centered on the fiber axis. The lines are written at pulse energies of 100 nJ, measured just before the objective, with 1000 pulses per micrometer from the Ti:Sapphire laser 814 operating at a 1 kHz repetition rate. Prior to the writing process, the fiber coating is mechanically removed and the fiber end is cleaved. It is seen that the hologram is written from an end face of the fiber. The optical fiber may be moved via the xyz-stage 812 between exposures in order to form the written elements that make up the final hologram.

For the far-field imaging, the same xyz-stage 812 and fiber mount was used. The broadband light source is for these measurements replaced with a 1550 nm source 826, consisting of a DFB laser (Thorlabs S3FC1550) combined with a home-built erbium-doped fiber amplifier yielding 150 mW output power. The power in the far-field is measured using a high-dynamic-range power meter 828 with a fiber probe 830. The probe 830 is a high numerical aperture air-clad fiber 828 (NA=0.48, Ø50 $\mu$m core). The far-field image is obtained by scanning the fiber in a transverse plane while measuring the power, resulting in profiles as shown in Fig. 11, which is an example of the measured far-field intensity on a logarithmic scale. The distance $d$ to the fiber end is 16.3 mm. The far-field profiles were measured both before and after the refractive-index writing.

In order to determine the refractive-index change, the measured far-field profiles were compared to a numerical simulation. In the simulation, it was assumed that the modification is uniform with radius a and length $L$, and is followed by a piece of length $D_e$ of the unmodified fiber. The latter two parameters are illustrated in Fig. 12(a) and in the experiment obtained from images, such as in Fig. 12(b), taken with an optical microscope (Leica DMR). The image has been taken from the side with the fiber in index matching oil. The unmodified fiber is a standard step-index single-mode-fiber (SMF) with a core radius of 4.5 $\mu$m and a core-cladding index difference of 0.005 @ 1550 nm. The dashed lines mark the boundary between the core region and the cladding region of the optical fiber. The fiber modes of the unmodified and the modified part are found by solving the one-dimensional scalar wave equation by a finite-difference method.

For the propagation, standard mode-coupling theory was used with the assumption that the transitions are abrupt. The input is assumed to be the fundamental $LP_{01}$ mode of the SMF, and the overlap integrals to the $LP_{lm}$ modes in the modified fiber are calculated. It is assumed that the modification has cylindrical symmetry and is centered on the fiber axis, and thus the coupling to modes with $l \neq 0$ is forbidden by symmetry.

The field is propagated in the fiber by multiplying each mode with a phase factor $\exp(i\beta_m L)$, where $\beta_m$ is the propagation constant of the $LP_{0m}$ mode in the modified fiber. The procedure is repeated, now converting from the modified region back to the SMF, and propagating the light through the remaining distance $D_e$ to the end of the fiber. The far-field pattern is subsequently calculated using a Hankel transformation, and by applying appropriate corrections. These corrections include both a coordinate transformation and an intensity correction due to the conversion from an arc with radius $d$ to a plane at distance $d$, as the far-field measurements are done by scanning the stage transversely to the fiber. Furthermore, the corrections due to obliquity factor and angular-dependent coupling efficiency $\varepsilon_{eff}$ of the air-clad fiber are also applied. The latter as well as the distance d are obtained by matching the simulated curve to the unmodified far-field profile.

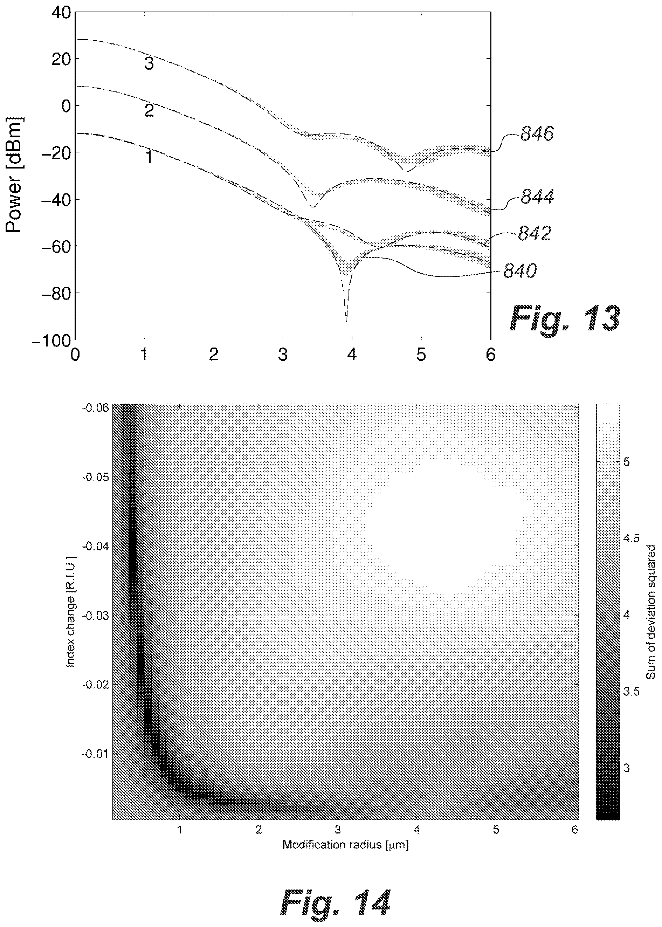

Figure 13 shows the measured far-field intensity profiles and the best matching simulated curves. A first curve 840 illustrates the profile for the unmodified fiber, while a second curve 842, third curve 844 and fourth curve 846 represent three different modifications. The modifications only differ in the lengths $L$ and depths $D_e$, which are 24 $\mu$m and 41 $\mu$m for the first modification (illustrated with second curve 842), 27 $\mu$m and 29 $\mu$m for the second modification (illustrated with third curve 844) and 25 μm and 11 μm for the third modification (illustrated with fourth curve 846), respectively. The shaded areas represent the measurement uncertainties, as these radial profiles are obtained by averaging the measured 2D-profiles over the azimuthal angle. The black dashed curves represent the simulated profiles. It should be noted that as all three modifications are written with the same laser parameters, the magnitude and the radius of the refractive-index change should be the same in all three cases. The three dashed curves represent simulations with a single set of refractive-index-change parameters, which have been chosen to match as close as possible all three measurements at the same time. The simulations shown are obtained using $\Delta n$ =-0.015 and $a$=0.6 μm. The second and third modifications are 10 and 20 dBm offset, respectively, for clarity.

The modification magnitude and radius are coupled, and decreasing the former while increasing the latter gives similar far-fields profiles. To illustrate this, the total sum of deviations of the three simulated curves from the measured data with varying $\Delta n$ and a is shown in Fig 14. The sum of the deviations are squared and shown on a logarithmic scale. It is clear that the two parameters are dependent. To limit the parameter space, the diameter of the modifications is estimated from the optical-microscope images to be $(1.2 \pm 0.2)$ μm, thus limiting the radius to $(0.6 \pm 0.1)$ μm. Subject to this constraint, the magnitude of the index modification is estimated to be $-0.015 \pm 0.005$. A negative refractive-index change after femtosecond laser writing has been reported previously, suggesting that the decrease is due to microscopic void formation. The error represents the sum of deviations for all three modifications.

The suggested method can in principle be used to make a mode converter between any modes. Such mode converters are expected to form stable optical devices, also in high-power applications: femtosecond-laser-written modifications have been shown to be thermally stable up to 900 ºC.

To provide a demonstration, the same methods for mode solving and propagation as described previously were used. This calculation approach is limited to symmetric mode converters, and thus an example is provided of how a possible mode converter coupling from the fundamental mode of a SMF to an $LP_{02}$ mode of a FMF could be fabricated. The mode converter consists of one or more modified regions either in the SMF or in the FMF. The SMF has the same parameters as before. The FMF is essentially a step-index fiber commercially available from OFS with core radius 12 μm and core-cladding index difference of 0.045 at 1550 nm. The FMF guides $LP_{01}$, $LP_{11}$, $LP_{21}$ and $LP_{02}$ modes. However, due to the assumed perfect cylindrical symmetry in the current work, only the $LP_{01}$ and $LP_{02}$ modes will be considered in the following. The mode converter is characterized by the extinction ratio $ER$ and the coupling efficiency $C_{LP02}$ to the $LP_{02}$ mode of the FMF. These are defined as

$$ER = 10 \cdot \log_{10} \frac{P_{LP_{02}}}{P_{LP_{01}}} \qquad (1)$$

$$C_{LP_{02}} = 10 \cdot \log_{10} \frac{P_{LP_{02}}}{P_{in}}, \qquad (2)$$

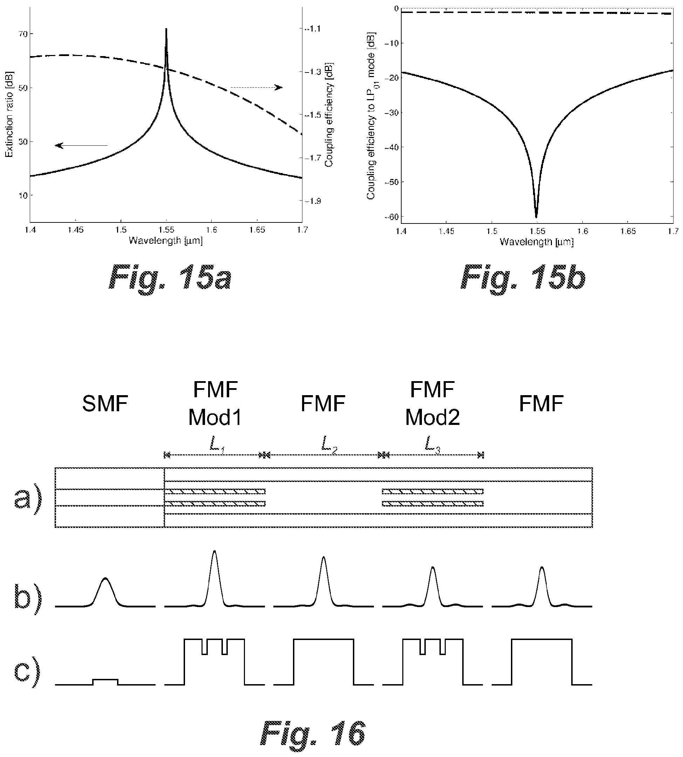

which are shown in Fig. 15 (a) for the optimized mode converter. Fig. 15 (a) shows the extinction ratio and coupling efficiency of the $LP_{01}$ SMF mode to the FMF $LP_{02}$ mode as a function of the wavelength, and Fig. 15 (b) shows the coupling efficiency to the $LP_{01}$ SMF mode under excitation with $LP_{01}$ FMF (solid curve) and $LP_{02}$ FMF (dashed curve) modes in reciprocal operation. According to the calculation, over 34 dB extinction ratio can be obtained over the entire C band (1530 nm to 1565 nm) with losses below 1.3 dB. More than 20 dB extinction ratio can be achieved over a 200 nm bandwidth with losses less than 1.6 dB based on the modal overlap.

The optimum mode converter is found by trying a few basic modification geometries and searching a large, but realistic parameter space for each geometry type, and finding the geometry and its parameters, which maximize the extinction ratio and the coupling efficiency. The presented mode converter is based on writing two modified regions of lengths $L_1$ and $L_3$ with distance $L_2$ between them into the FMF (see Fig. 16, the holograms shown as hatched areas). Both modifications are ring shaped trenches due to the negative sign of the index modification, which is taken to be the -0.015 found from the far-field measurements demonstrated above. The optimal inner radius, thickness and length of the first ring are 3.55 μm, 2.0 μm and 110 μm, respectively, and for the second ring 3.3 μm, 1.85 μm and 108 μm. The optimal distance between the two modification regions is found to be 16 μm. Fig. 16a shows the converter comprising the SMF and FMF, Fig. 16c shows the refractive index of the different segments, and Fig. 16b shows the resulting intensity in the middle of each segment.

The mode converter works also in a reciprocal manner, where either the $LP_{01}$ or the $LP_{02}$ mode of the FMF is launched from the FMF end. The coupling efficiency to the SMF $LP_{01}$ mode under $LP_{02}$ FMF launch is shown in Fig. 15 (b) as the dashed curve and matches the efficiency in the forward mode shown in Fig. 15 (a). The coupling under $LP_{01}$ FMF launch is shown in Fig. 15 (b) as the solid curve and suffers at least -35 dB losses in the C band and -22 dB between 1450 nm and 1650 nm. Therefore the mode converter can also work in reciprocal operation, converting the $LP_{02}$ FMF

mode to $LP_{01}$ SMF mode, or put in other words, the mode converter could also be used as a mode filter transmitting only the power in the $LP_{02}$ mode.

SUMMARY

The basic building blocks for making a femtosecond-laser-written, all-fiber mode converter has been described. As an example, three roughly 25 $\mu$m long lines were fabricated at different depths in the fiber, resulting in a negative refractive-index change of -0.015 $\pm$ 0.005 within a radius of (0.6 $\pm$ 0.1) $\mu$m. These values were determined by comparing measured far-field intensity profiles to numerical simulations. Changing the writing parameters, such as the pulse energy and writing speed, would allow control of the modifications. For a proof of principle, the same numerical tools were used to simulate a possible $LP_{01}$-$LP_{02}$ converter. The converter shows high extinction ratio and low loss over a broad wavelength range and also supports reciprocal operation.

### Reference Numerals

| | |
|---|---|
| 10, 110, 210, 310, 410, 510, 610, 710 | Optical waveguide / optical fiber |
| 12, 112, 212, 312, 412, 512, 612, 712 | Core region |
| 14, 114, 614, 714 | Hologram |
| 16 | First axial segment |
| 18, 218, 318, 418 | Written elements |
| 20, 120, 520, 620, 720 | Cladding region |
| 22 | Elongated element |
| 24 | First ring |
| 26 | Second ring |
| 60, 560 | Optical waveguide / optical fiber |
| 62, 562 | Core region |
| 68, 568, 588 | Written elements |
| 574 | First hologram |
| 594 | Second hologram |
| 740 | Light source |
| 810 | Optical fiber |
| 812 | Motorized xyz-stage |
| 814 | Laser |
| 816 | Microscope objective |
| 818 | Oil lens |
| 820 | Broadband light source |
| 822 | Camera |
| 824 | Achromatic lens |
| 826 | 1550 nm laser |
| 828 | Power meter |
| 830 | Fiber probe |
| 840 | First curve |
| 842 | Second curve |
| 844 | Third curve |
| 846 | Fourth curve |

(continued)

| | |
|---|---|
| $t$ | Core thickness |
| $D$ | Core Diameter |
| $L_1$ | First axial length |
| $N_c$ | Core refractive index / unmodified refractive index |
| $N_e$ | Refractive index of written element / modified refractive index |

**Claims**

1. An optical waveguide (10, 60, 110, 210, 310, 410, 510, 560, 610, 710), comprising:

    an axial direction;
    a cross-section perpendicular to said axial direction;
    a core region (12, 62, 112, 212, 312, 412, 512, 562, 612, 712) having a core thickness, wherein the core region (12, 62, 112, 212, 312, 412, 512, 562, 612, 712) includes an integrally formed hologram (14, 114, 574, 594, 614, 714), which extends along a first axial segment (16) of the optical waveguide (10, 60, 110, 210, 310, 410, 510, 560, 610, 710), the first axial segment (16) having a first axial length, wherein the hologram (14, 114, 574, 594, 614, 714) seen in the cross-section includes a micro-structure with written elements (18, 68, 218, 318, 418, 568, 588) having a modified refractive index different from areas of the core region (12, 62, 112, 212, 312, 412, 512, 562, 612, 712) with an unmodified refractive index,
    wherein the waveguide (10, 60, 110, 210, 310, 410, 510, 560, 610, 710) is configured for propagating light in the axial direction, and
    wherein the written elements (18, 68, 218, 318, 418, 568, 588) individually have a dimension, which is smaller than the core thickness.

2. The optical waveguide (10, 110, 210, 310, 410, 510, 560, 610, 710) as defined in claim 1, wherein the optical waveguide (10, 110, 210, 310, 410, 510, 560, 610, 710) is an optical fiber, and wherein the core thickness is a core diameter.

3. The optical waveguide (10, 60, 110, 210, 310, 410, 510, 560, 610, 710) according to claim 1, wherein the hologram (14, 114, 574, 594, 614, 714) is arranged so that an axial end of the hologram (14, 114, 574, 594, 614, 714) is located 500 $\mu$m or less from an end face of the optical waveguide (10, 60, 110, 210, 310, 410, 510, 560, 610, 710).

4. The optical waveguide (10, 60, 110, 210, 310, 410, 510, 560, 610, 710) according to claim 1, wherein the written elements (18, 68, 218, 318, 418, 568, 588) have a cross-sectional dimension which is between 0.01% and 40% of the core thickness.

5. The optical waveguide (10, 60, 110, 210, 310, 410, 510, 560, 610, 710) according to claim 1, wherein the written elements (18, 68, 218, 318, 418, 568, 588) are formed as elongated elements.

6. The optical waveguide (10, 60, 110, 210, 310, 410, 510, 560, 610, 710) according to claim 5, wherein the elongated elements are oriented parallel to the axial direction of the optical waveguide (10, 60, 110, 210, 310, 410, 510, 560, 610, 710).

7. The optical waveguide (310, 410) according to claim 1, wherein the written elements (318, 418) are arranged asymmetrically in the core region (312, 412).

8. The optical waveguide (10, 60, 110, 210, 510, 560, 610, 710) according to claim 1, wherein the written elements (18, 68, 218, 568, 588) are arranged symmetrically in the core region (12, 62, 112, 212, 512, 562, 612, 712).

9. The optical waveguide (10, 60, 110, 210, 310, 410, 510, 560, 610, 710) according to claim 1, wherein the modified refractive index is between 0.005 and 0.05 lower or higher than the unmodified refractive index.

10. The optical waveguide (10, 60, 110, 210, 310, 410, 510, 560, 610, 710) according to claim 1, wherein the length of the first axial segment (16) is 10-1000 μm.

**Patentansprüche**

1. Ein Lichtwellenleiter (10, 60, 110, 210, 310, 410, 510, 560, 610, 710), der folgende Merkmale aufweist:

   eine Axialrichtung;
   einen zu der Axialrichtung senkrechten Querschnitt;
   eine Kernregion (12, 62, 112, 212, 312, 412, 512, 562, 612, 712) mit einer Kerndicke, wobei die Kernregion (12, 62, 112, 212, 312, 412, 512, 562, 612, 712) ein einstückig gebildetes Hologramm (14, 114, 574, 594, 614, 714) umfasst, das sich entlang eines ersten Axialsegments (16) des Lichtwellenleiters (10, 60, 110, 210, 310, 410, 510, 560, 610, 710) erstreckt, wobei das erste Axialsegment (16) eine erste Axiallänge aufweist, wobei das Hologramm (14, 114, 574, 594, 614, 714) im Querschnitt gesehen eine Mikrostruktur mit beschriebenen Elementen (18, 68, 218, 318, 418, 568, 588) umfasst, die einen modifizierten Brechungsindex aufweisen, der sich von Bereichen der Kernregion (12, 62, 112, 212, 312, 412, 512, 562, 612, 712) mit einem unmodifizierten Brechungsindex unterscheidet,
   wobei der Wellenleiter (10, 60, 110, 210, 310, 410, 510, 560, 610, 710) zum Ausbreiten von Licht in der Axialrichtung ausgebildet ist und
   wobei die beschriebenen Elemente (18, 68, 218, 318, 418, 568, 588) jeweils eine Abmessung aufweisen, die kleiner ist als die Kerndicke.

2. Der Lichtwellenleiter (10, 110, 210, 310, 410, 510, 560, 610, 710) gemäß Anspruch 1, wobei der Lichtwellenleiter (10, 110, 210, 310, 410, 510, 560, 610, 710) eine optische Faser ist und wobei die Kerndicke ein Kerndurchmesser ist.

3. Der Lichtwellenleiter (10, 60, 110, 210, 310, 410, 510, 560, 610, 710) gemäß Anspruch 1, bei dem das Hologramm (14, 114, 574, 594, 614, 714) derart angeordnet ist, dass sich ein axiales Ende des Hologramms (14, 114, 574, 594, 614, 714) 500 μm oder weniger entfernt von einer Endfläche des Lichtwellenleiters (10, 60, 110, 210, 310, 410, 510, 560, 610, 710) befindet.

4. Der Lichtwellenleiter (10, 60, 110, 210, 310, 410, 510, 560, 610, 710) gemäß Anspruch 1, bei dem die beschriebenen Elemente (18, 68, 218, 318, 418, 568, 588) eine Querschnittsabmessung aufweisen, die zwischen 0,01 % und 40 % der Kerndicke liegt.

5. Der Lichtwellenleiter (10, 60, 110, 210, 310, 410, 510, 560, 610, 710) gemäß Anspruch 1, bei dem die beschriebenen Elemente (18, 68, 218, 318, 418, 568, 588) als längliche Elemente gebildet sind.

6. Der Lichtwellenleiter (10, 60, 110, 210, 310, 410, 510, 560, 610, 710) gemäß Anspruch 5, bei dem die länglichen Elemente parallel zu der Axialrichtung des Lichtwellenleiters (10, 60, 110, 210, 310, 410, 510, 560, 610, 710) ausgerichtet sind.

7. Der Lichtwellenleiter (310, 410) gemäß Anspruch 1, bei dem die beschriebenen Elemente (318, 418) asymmetrisch in der Kernregion (312, 412) angeordnet sind.

8. Der Lichtwellenleiter (10, 60, 110, 210, 510, 560, 610, 710) gemäß Anspruch 1, bei dem die beschriebenen Elemente (18, 68, 218, 568, 588) symmetrisch in der Kernregion (12, 62, 112, 212, 512, 562, 612, 712) angeordnet sind.

9. Der Lichtwellenleiter (10, 60, 110, 210, 310, 410, 510, 560, 610, 710) gemäß Anspruch 1, bei dem der modifizierte Brechungsindex zwischen 0,005 und 0,05 niedriger oder höher ist als der unmodifizierte Brechungsindex.

10. Der Lichtwellenleiter (10, 60, 110, 210, 310, 410, 510, 560, 610, 710) gemäß Anspruch 1, bei dem die Länge des ersten Axialsegments (16) 10-1000 μm beträgt.

**Revendications**

1. Guide d'onde optique (10, 60, 110, 210, 310, 410, 510, 560, 610, 710), comprenant:

une direction axiale;

une section transversale perpendiculaire à ladite direction axiale;

une région de noyau (12, 62, 112, 212, 312, 412, 512, 562, 612, 712) présentant une épaisseur de noyau, où la région de noyau (12, 62, 112, 212, 312, 412, 512, 562, 612, 712) comporte un hologramme formé de manière solidaire (14, 114, 574, 594, 614, 714) qui s'étend le long d'un premier segment axial (16) du guide d'onde optique (10, 60, 110, 210, 310, 410, 510, 560, 610, 710), le premier segment axial (16) présentant une première longueur axiale, où l'hologramme (14, 114, 574, 594, 614, 714), vu en vue en coupe, comporte une microstructure avec des éléments écrits (18, 68, 218, 318, 418, 418, 568, 588) présentant un indice de réfraction modifié différent des zones de la région de noyau (12, 62, 112, 212, 312, 412, 512, 562, 612, 712) à indice de réfraction non modifié,

dans lequel le guide d'ondes (10, 60, 110, 210, 310, 410, 510, 560, 610, 710) est configuré pour propager la lumière dans la direction axiale, et

dans lequel les éléments écrits (18, 68, 218, 318, 418, 568, 588) présentent individuellement une dimension qui est inférieure à l'épaisseur du noyau.

2. Guide d'onde optique (10, 110, 210, 310, 410, 510, 560, 610, 710) selon la revendication 1, dans lequel le guide d'onde optique (10, 110, 210, 310, 410, 510, 560, 610, 710) est une fibre optique, et dans lequel l'épaisseur de noyau est un diamètre de noyau.

3. Guide d'onde optique (10, 60, 110, 210, 310, 410, 510, 560, 610, 710) selon la revendication 1, dans lequel l'hologramme (14, 114, 574, 594, 614, 714) est disposé de sorte qu'une extrémité axiale de l'hologramme (14, 114, 574, 594, 614, 714) soit située à 500 μm ou moins de la face d'extrémité du guide d'onde optique (10, 60, 110, 210, 310, 410, 510, 560, 610, 710).

4. Guide d'onde optique (10, 60, 110, 210, 310, 410, 510, 560, 610, 710) selon la revendication 1, dans lequel les éléments écrits (18, 68, 218, 318, 418, 568, 588) présentent une dimension de section transversale qui est comprise entre 0,01% et 40% de l'épaisseur du noyau.

5. Guide d'onde optique (10, 60, 110, 210, 310, 410, 510, 560, 610, 710) selon la revendication 1, dans lequel les éléments écrits (18, 68, 218, 318, 418, 568, 588) sont formés comme éléments allongés.

6. Guide d'onde optique (10, 60, 110, 210, 310, 410, 510, 560, 610, 710) selon la revendication 5, dans lequel les éléments allongés sont orientés parallèlement à la direction axiale du guide d'ondes optique (10, 60, 110, 210, 310, 410, 510, 560, 610, 710).

7. Guide d'onde optique (310, 410) selon la revendication 1, dans lequel les éléments écrits (318, 418) sont disposés de manière asymétrique dans la région de noyau (312, 412).

8. Guide d'onde optique (10, 60, 110, 210, 510, 560, 610, 710) selon la revendication 1, dans lequel les éléments écrits (18, 68, 218, 568, 588) sont disposés de manière symétrique dans la région de noyau (12, 62, 112, 212, 512, 562, 612, 712).

9. Guide d'onde optique (10, 60, 110, 210, 310, 410, 510, 560, 610, 710) selon la revendication 1, dans lequel l'indice de réfraction modifié est d'une valeur de 0,005 à 0,05 inférieure ou supérieure à l'indice de réfraction non modifié.

10. Guide d'onde optique (10, 60, 110, 210, 310, 410, 510, 560, 610, 710) selon la revendication 1, dans lequel la longueur du premier segment axial (16) est comprise entre 10 et 1000 μm.

**Fig. 1a**

**Fig. 1b**

**Fig. 2**

**Fig. 3**

**Fig. 4**

**Fig. 5**

**Fig. 6**

**Fig. 7**

**Fig. 8**

**Fig. 9**

*Fig. 10*

*Fig. 11*

*Fig. 12*

*Fig. 13*

*Fig. 14*

**Fig. 15a**

**Fig. 15b**

**Fig. 16**

**EP 2 951 623 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7116453 B2